# EUROPEAN PATENT APPLICATION

(11) **EP 2 631 422 A2**
(43) Date of publication of application: **28.08.2013**
(21) Application number: 13461507.9
(22) Date of filing: 25.02.2013
(51) Int. Cl.: E21B 41/00, E21B 43/00, E21B 43/26

(54) **Method of conjugated hydrocarbon gas extraction and storage CO2 in horizontal wellbores**

(30) Priority: 24.02.2012 PL 39822812
(71) Applicant: Wojskowa Akademia Techniczna, 00-908 Warszawa (PL)
(72) Inventor: Niezgoda, Tadeusz, 01-479 Warszawa (PL); Miedzinska, Danuta, 03-287 Warszawa (PL); Gieleta, Roman, 03-134 Warszawa (PL); Slawinski, Grzegorz, 05-220 Zielonka (PL); Derewonko, Agnieszka, 01-496 Warszawa (PL); Morka, Andrzej, 05-270 Marki (PL)
(74) Representative: Rumpel, Alicja

(57) **Abstract**

A method of combined extraction of gaseous hydrocarbons and CO₂ storage in horizontal wells which involves drilling a vertical well (1) in the gas-bearing shale deposit (2) located between seams of different types of rock (3), where horizontal or quasi-horizontal wells (4a, 4b, 4c) are drilled off radially at least at two depths, and then the horizontal wells (4b, 4c) are closed with plugs and/or valves controlled from the surface (6b, 6c), into which flexible or semi-flexible small-diameter pipes (7) are brought in via the main vertical (1). The pipes (7) are brought into the lateral wells (4a), and then they are used for injecting cooled, compressed liquid CO₂, possibly with an admixture of dry sand to maintain fractures, into the gas-bearing shale deposit (2) using a cryogenic pump, while the temperature and pressure in the wells (1) and (4a) are controlled during the CO₂ injection on an ongoing basis by appropriate sensors installed inside them. After this stage is completed, the wells (4a) are also closed with plugs and/or mini-valves controlled from the surface in the vertical pipe, and in the shale deposit (2), the process of CO₂ decompression begins and it undergoes phase transition under the temperature in the deposit, which causes intense shale fracturing, CO₂ adsorption and simultaneous shale gas desorption. Then the lateral wells (4a) are pre-perforated and pressure sensors are installed near the closed lateral wells to enable controlling shale processes. The resulting fractures (5) in the gas-bearing shale deposit (2) enable releasing shale gas which is forced out by heavier CO₂. The lateral wells (4b, 4c) are opened and the released gas under high pressure comes out via the vertical well (1), and the process of gas recovery from the well can occur spontaneously or be carried out under reduced pressure. The method may also be used for storing CO₂ greenhouse gas after exhaustion of the shale gas deposit in that the gas deposit is shut in permanently by plugging the well at an appropriate height or closing it with a possibility of further use of the deposit.

## Description

This invention relates to the method of combined extraction of gaseous hydrocarbons and CO₂ storage in horizontal wells. The method enables in particular extraction of gaseous hydrocarbons, and at the same time underground storage of CO₂ in their place.

For reasons relating to the properties of rocks with accumulated hydrocarbons, deposits are broken down into two categories: conventional and unconventional deposits. Extraction of unconventional gas is more difficult in technical terms and more expensive. Unconventional gas deposits include shale gas, tight gas, coal bed methane and gas hydrates. The current degree of technological advancement enables extracting gas from unconventional sources at industrial scale capacity. This is a topical issue, especially today, due to the focus on using unconventional energy sources. According to the statistics of the Energy Information Administration the shale gas extraction will account for 7% of world natural gas production by 2030. Shale gas is particularly abundant in Poland where Wood Mackenzie estimated shale gas resources as equal to 1.4b m³. However, according to Advanced Resources International estimates, these reserves can contain as much as 3b m³ of shale gas. Reliable information about the actual reserves will be available most probably in 4-5 years when the prospecting and identification works under shale gas exploration licences granted by the Ministry of Environment are completed.

The development of shale gas extraction became possible as a result of the lower costs of the technology used for drilling horizontal wells and hydraulic fracturing. The current method of drilling horizontal wells involves first drilling of a vertical section of a borehole, and then - having achieved the target depth - changing to horizontal trajectory and drilling the selected rock layer.

Hydraulic fracturing involves pouring liquid under very high pressure into the selected section of a borehole, where the liquid consists of the medium (mainly water), materials for filling fractures (mainly sand of appropriate granulation and mechanical strength) and chemical additives (mainly to improve viscosity). The liquid under pressure creates fractures in the rock structures and sand fills and maintains fractures, thus forming new paths for gas migration to the borehole. During the hydraulic fracturing procedure 7.5 to 11.3m litres of fracturing liquid and 450 to 680 tons of sand is injected into one borehole. A method of hydraulic fracturing is known according to the patent description no. EP1999340 which involves the step of pre-treatment of the formation using a penetrability modifier which changes physical properties of the formation and helps to increase the efficiency of fracturing liquid. Higher efficiency of the liquid provides greater fracturing of the carbon container, less damage to cleavage planes and greater quantity of extracted water (during the dewatering procedure) and gas (during the production procedure). An appropriate ingredient of the modifier is for example carbon dioxide.

Another known method of extracting natural gas from deposits is underground extraction. Methane can be eliminated from underground mines before and after extraction of e.g. carbon with the use of degassing systems. Gas can be ventilated or recovered on account of its energy capacity potential. The degassing procedure allows recovering 50-60% of methane from the mine; the remaining gas is released to the atmosphere. In underground mining, methane is frequently released to pit shafts and then to the atmosphere.

Another method used for extracting natural gas from deposits is surface extraction. During surface extraction methane is usually released to the atmosphere while removing the cap rock layer, although no emission control methods are currently used for this type of release. Theoretically, preliminary degassing and recovery procedures can be carried out in surface mines. However, effective extraction is neither technically feasible nor profitable due to the low level of gas in most surface mines compared to underground mines. Even though degassing systems are not used, mines continue to emit significant amounts of methane through ventilation systems. Technologies are being developed for catalytic oxidation of low concentrations of methane in the ventilating air, producing useful heat as a by-product. Methane recovered in the degassing procedure can be used for injecting into the gas pipeline, producing power, used locally in carbon-based dehumidifiers or sold to nearby industrial or business facilities. Currently, most of the methane recovered from coal mines is sold via gas pipelines.

Another method was presented in the US patent no. 7,264,049 concerning an *in situ* method of coal gasification, where an *in situ* process was suggested for coal gasification with the use of liquefied gases and kerosene combustion to release heat. The *in situ* process for coal gasification and production of gas hydrates is carried out via a system of fractures produced by injecting liquefied gases into a horizontal well and enabling their evaporation. This causes coal ignition and gases released in the process are recovered from fractured formations. The essential feature of this method is the creation of large systems of fractures to carry out heat processes in the deposit. This method is used for coal beds; however, it is of no particular use for shale gas deposits.

Another US patent no. 4,374,545 concerning the process of crushing by using carbon dioxide and apparatus describes a method of crushing in an underground rock formation in which a vertical well was carried out, without lateral wells, to bring in carbon dioxide into the deposit. Liquefied CO₂ and a chemical maintenance agent are pumped into the formation via a well pipe to fracture the formation and to cause the fractures to remain open as a result of the maintenance agent. The injected compressed liquid carbon dioxide is exposed to higher temperatures which induces its phase transition into gas, thus causing the rock to be crushed further. A disadvantage of this method is the use of maintenance agents and chemical substances which may have an adverse impact on the environment.

On the other hand, the US patent application no. 2011/0209882 Al describes a method and apparatus for CO₂ sequestration and releasing natural gas (CH₄) from underground coal deposits or gas-bearing shale using CO₂ captured from gas produced in the process of coal combustion in the chimney flue of the power station and processed to cooled, compressed liquid CO₂, which is injected to create fractures in the deposit and cause its adsorption by coal or shale and CH₄ desorption. No large quantities of water, toxic additives in water or sand for deposit filling are used. According to the patent, liquid CO₂ cooled down to -40F and compressed to 4000 psi with a cryogenic pump is pumped into a vertical well via a pipeline made of high-strength steel pre-cooled with liquid nitrogen. The pipe is provided with thermocouples to control the temperature of CO₂. The end of the pipe in the vertical well has a reduced diameter and small holes on the perimeter. Liquid CO₂ is injected via the holes into the coal bed or shale deposit, thus forming horizontal paths. A sudden increase in the gas temperature causes a rapid increase in the pressure, thus creating fractures in the rock structure. The formation of fractures can extend to 300 m horizontally, in different directions at the same time. Having pumped CO₂ to the specific maximum pressure, the well is closed with a valve. The process of CO₂ reacting and decompressing in the rock takes about 2 weeks. After this time, the other neighbouring separate well is opened with a valve and CH₄ gas is released through the well, forced out from the fractured rock by heavier CO₂. Then all the steps of the process are repeated several times. It has been suggested to use multiple wells to bring in CO₂ into the deposit and a separate well to carry away released CH₄. A disadvantage of this solution is the use of multiple vertical wells to carry out one extraction process and the small scope of rock fracturing caused by using only compressed CO₂.

A method of combined extraction of gaseous hydrocarbons (e.g. shale gas) and storage of CO₂ or another gas heavier than CH₄ from small-diameter horizontal wells drilled in a single vertical well according to the invention involves recovering gaseous hydrocarbon by pumping cooled, compressed liquid CO₂ into these wells, penetration of the rock by CO₂ and its phase transition under the temperature in the deposit, intense fracturing of the rock, CO₂ adsorption and simultaneous desorption of the gaseous hydrocarbon. The process of recovering gaseous hydrocarbons takes place via the same main vertical well which is used for injecting properly prepared CO₂, and the process can be spontaneous or carried out under reduced pressure. The first step involves proper drilling of a vertical well in the gas-bearing shale deposit located between seams of different types of rock. Small-diameter wells are drilled at least at two depths off the vertical well radially, on the perimeter of the main well. In the preferred embodiment of the invention shale in the wells at one of the levels can be pre-perforated (crushed) using different methods of rock destruction.

The next step involves closing of the lateral wells using plugs or valves controlled from the surface. Small-diameter flexible or semi-flexible pipes are brought in via the main well from the surface and the pipes are insulated or made of highly-insulating material, or they require pre-cooling. The pipes are introduced into the lateral wells. Then they are used for injecting cooled, compressed liquid CO₂, possibly with an admixture of dry sand to maintain fractures, into the shale gas deposit using a cryogenic pump. The entire process of CO₂ injection requires controlling temperature and pressure in the wells on an ongoing basis which makes it necessary to install appropriate sensors inside the wells. After this stage is completed, the wells are also closed with plugs or valves controlled from the surface (thus obtaining a self-supporting structure). In the shale deposit, the process of CO₂ decompression begins and it undergoes phase transition under the temperature in the deposit, which causes intense shale fracturing, CO₂ adsorption and simultaneous shale gas desorption. The pre-perforation which may be carried out in the lateral wells, into which CO₂ is introduced, allows intensifying and expanding the fracturing process. Pressure sensors are installed in the deposit, near the closed lateral wells so that it is possible to control processes occurring in the shale. Additionally, the process can be controlled by adding or releasing CO₂ via the valves. The intense fracturing in the gas-bearing shale deposit enables releasing shale gas which is forced out by heavier CO₂. The lateral wells are opened and the released gas under high pressure comes out via the vertical well. The process of gas recovery from the well can occur spontaneously or be carried out under reduced pressure.

In the preferred embodiment of the invention, multiple horizontal wells are used and processes are carried out on a step-by-step basis by closing and opening the wells and filling them with liquid CO₂ one by one. The location and number of horizontal wells at one depth is adapted to the spatial structure of the deposit. In the most preferred embodiment of the invention, a series of such processes are carried out on a bottom-up basis. The method may also be used for storing CO₂ greenhouse gas after exhaustion of the shale gas deposit in that the deposit is shut in permanently by plugging the borehole at an appropriate height or closing it with a possibility of further use of the deposit for further gas extraction. Another gas heavier than the extracted hydrocarbon may be used in place of CO₂ in the process. The method may be used for different types of gas-bearing or porous rocks. It may also be used in the main wells in which horizontal fragments are drilled at least at two depths.

The invention is beneficial in terms of environmental protection. It requires no large quantities of water, chemical additives and sand for filling the deposit. It also allows using only one vertical well (possibly the existing wells) with horizontal wells to carry out the entire extraction process. A large area of rock crushing is obtained in the deposit compared to other methods which increases the economic profitability of a single well. The method of forcing out shale gas is very effective, and the adsorption and desorption processes occur at the gas molecular level.

Coal or shale may adsorb twice the CO₂ volume compared to methane. This property may be used for obtaining so-called pure energy (in a closed cycle), i.e. methane combustion in close proximity to the deposit to obtain e.g. electric energy and re-injecting CO₂ produced in the processes into the shale deposit. Thus, it could be stated that the suggested national solution of shale gas extraction from small-diameter horizontal wells using liquid CO₂ in a single well is beneficial in terms of both the economy and environmental protection.

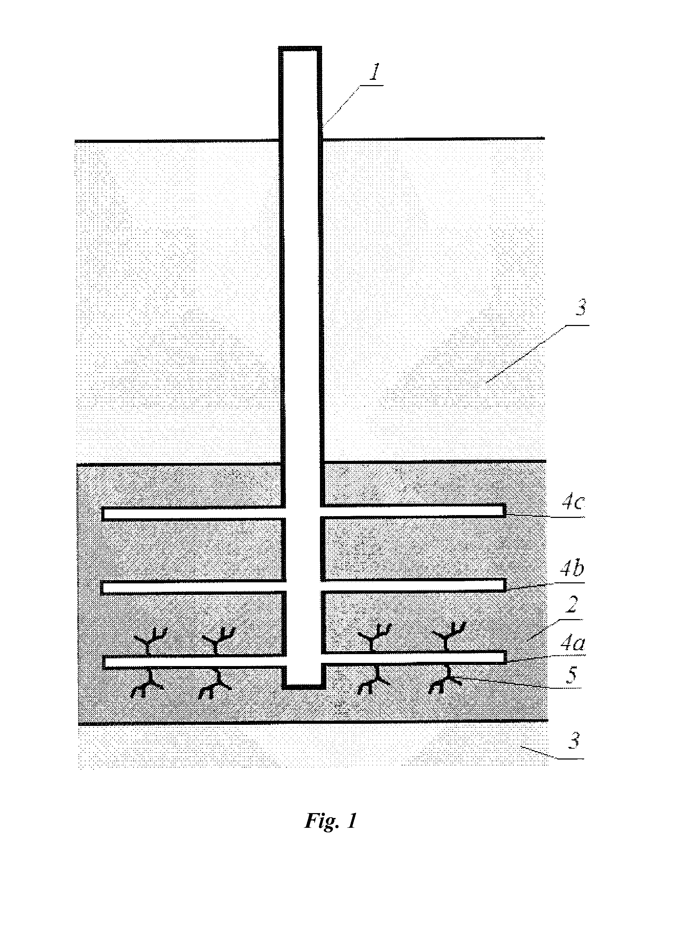

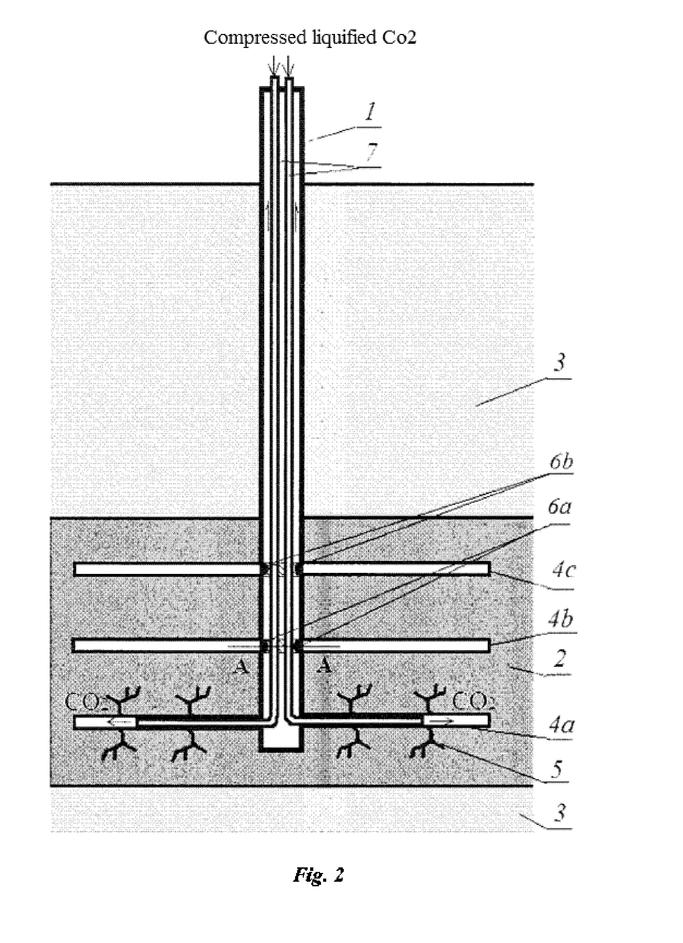

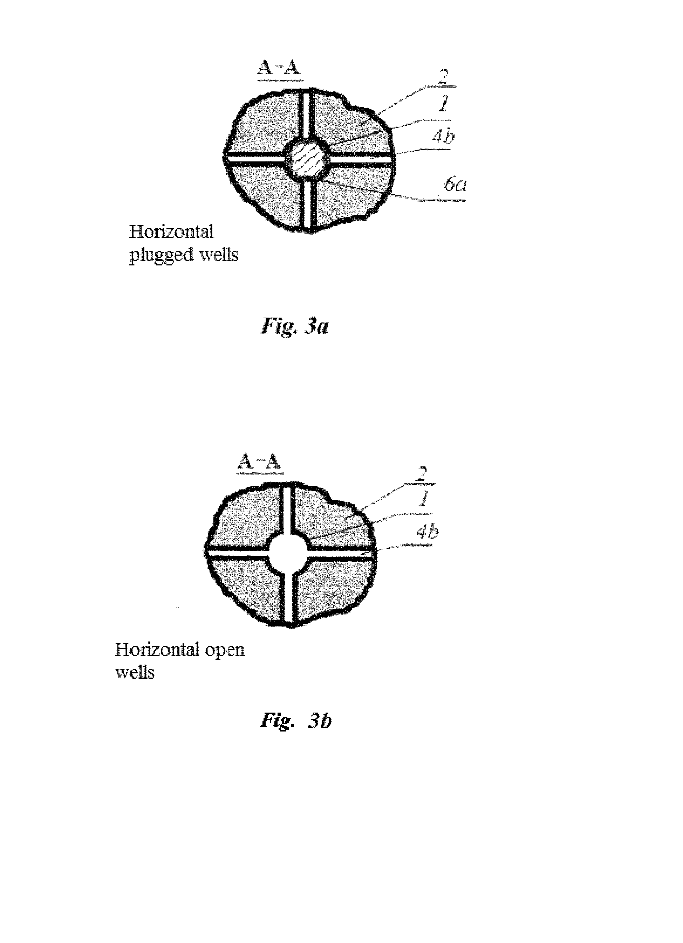

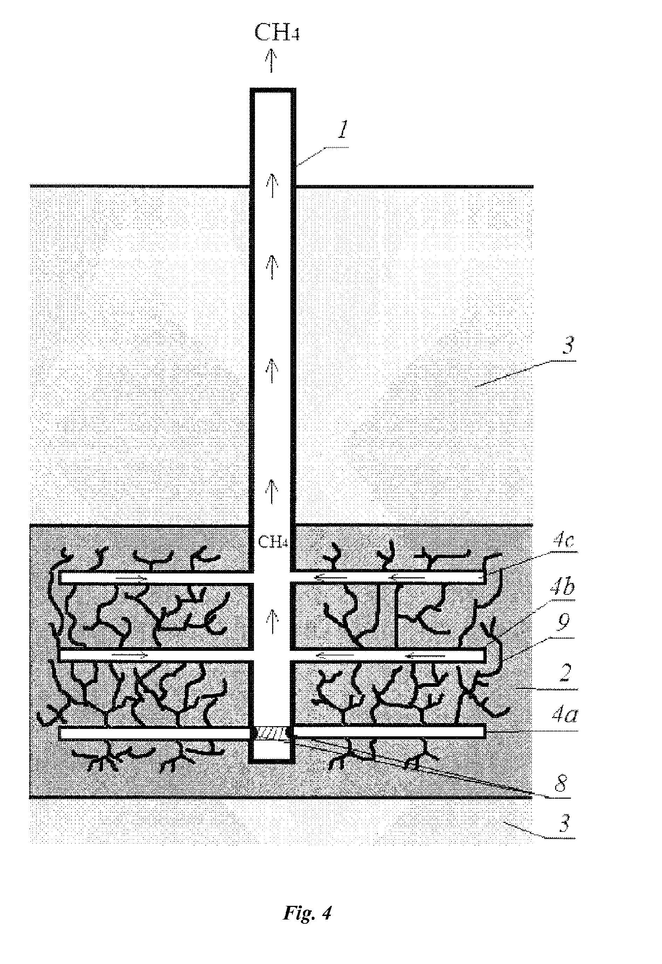

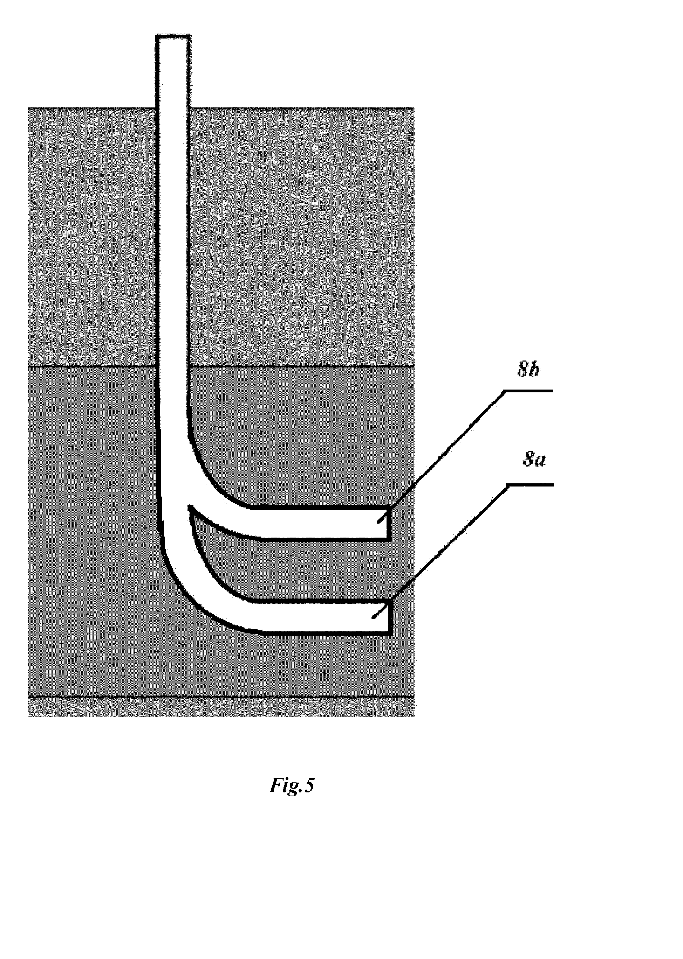

The subject of the invention is shown by way of examples of embodiment, where Fig. 1 shows the drilling of lateral, horizontal or quasi-horizontal wells which may be pre-perforated, and Fig. 2 shows another stage when the horizontal wells are closed and liquid CO₂ is pumped into the well. On the other hand Fig. 3a and Fig. 3b show the cross-section of the vertical well with or without a plug disc, while Fig. 4 shows the stage when the horizontal wells are opened and CO₂ forces out shale gas under large pressure from the deposit. Fig. 5 shows the location of the main wells in which horizontal fragments are located at least at two depths, in which the process of shale gas extraction can be carried out.

### Example I

The first step of the process according to the invention involves drilling a vertical well (1) in the gas-bearing shale deposit (2) located between seams of different types of rock (3). Small-diameter wells (4a, 4b, 4c) are drilled at least at two depths off the vertical well (1) radially, on the perimeter of the main well. Shale in the wells (4a) at one of the levels can be pre-perforated (5) (crushed) using different methods of rock destruction.

Next, the lateral wells (4b, 4c) are closed with plugs or valves controlled from the surface (6a, 6b). Small-diameter flexible or semi-flexible pipes (7) are introduced from the surface via the main well (1), where the pipes are insulated, made of highly-insulating material or they require pre-cooling. The pipes (7) are introduced into the lateral wells (4a). Then they are used for injecting cooled, compressed liquid CO₂, possibly with an admixture of dry sand to maintain fractures, into the gas-bearing shale deposit (2) using a cryogenic pump. The entire process of CO₂ injection requires controlling temperature and pressure in the wells (1) and (4a) on an ongoing basis which makes it necessary to install appropriate sensors inside the wells. After this stage is completed, the wells (4a) are also closed with plugs or valves controlled from the surface (8) (thus obtaining a self-supporting structure). In the shale deposit (2), the process of CO₂ decompression begins and it undergoes phase transition under the temperature in the deposit, which causes intense shale fracturing, CO₂ adsorption and at the same time shale gas desorption. The intense fracturing in the gas-bearing shale deposit (2) enables releasing shale gas which is forced out by heavier CO₂. The lateral wells (4b, 4c) are opened and the released gas under high pressure comes out via the vertical well (1). The process of gas recovery from the well can occur spontaneously or be carried out under reduced pressure.

### Example II

The first step of the process according to the invention involves drilling a vertical well (1) in the gas-bearing shale deposit (2) located between seams of different types of rock (3). Small-diameter wells (4a, 4b, 4c) are drilled at least at two depths off the vertical well (1) radially, on the perimeter of the main well. Shale in the wells (4a) at one of the levels can be pre-perforated (5) (crushed) using different methods of rock destruction.

Next, the lateral wells (4b, 4c) are closed with plugs or valves controlled from the surface (6a, 6b). Small-diameter flexible or semi-flexible pipes (7) are introduced from the surface via the main well (1), where the pipes are insulated, made of highly-insulating material or they require pre-cooling. The pipes (7) are introduced into the lateral wells (4a). Then they are used for injecting cooled, compressed liquid CO₂, possibly with an admixture of dry sand to maintain fractures, into the gas-bearing shale deposit (2) using a cryogenic pump. The entire process of CO₂ injection requires controlling temperature and pressure in the wells (1) and (4a) on an ongoing basis which makes it necessary to install appropriate sensors inside the wells. After this stage is completed, the wells (4a) are also closed with plugs or valves controlled from the surface (8) (thus obtaining a self-supporting structure). In the shale deposit (2), the process of CO₂ decompression begins and it undergoes phase transition under the temperature in the deposit, which causes intense shale fracturing, CO₂ adsorption and at the same time shale gas desorption. The lateral wells are pre-perforated and CO₂ is injected, thus allowing intensification and expansion of the fracturing process. Pressure sensors are installed in the deposit, near the closed lateral wells so that it is possible to control processes occurring in the shale. Additionally, the process can be controlled by adding or releasing CO₂ via the valves (6a, 6b and 8). The intense fracturing in the gas-bearing shale deposit (2) enables releasing shale gas which is forced out by heavier CO₂. The lateral wells (4b, 4c) are opened and the released gas under high pressure comes out via the vertical well (1). The process of gas recovery from the well can occur spontaneously or be carried out under reduced pressure.

### Example III

The first step of the process according to the invention involves drilling a vertical well (1) in the gas-bearing shale deposit (2) located between seams of different types of rock (3). Multiple small-diameter wells (4a, 4b, 4c) are drilled at different depths off the vertical well (1) radially, on the perimeter of the main well. Shale in the wells (4a) at one of the levels can be pre-perforated (5) (crushed) using different methods of rock destruction.

Next, the lateral wells (4b, 4c) are closed with plugs or valves controlled from the surface (6a, 6b). Small-diameter flexible or semi-flexible pipes (7) are introduced from the surface via the main well (1), and the pipes are insulated, made of highly-insulating material or they require pre-cooling. The pipes (7) are introduced into the lateral wells (4a). Then they are used for injecting cooled, compressed liquid CO₂, possibly with an admixture of dry sand to maintain fractures, into the gas-bearing shale deposit (2) using a cryogenic pump. The entire process of CO₂ injection requires controlling temperature and pressure in the wells (1) and (4a) on an ongoing basis which makes it necessary to install appropriate sensors inside the wells. After this stage is completed, the wells (4a) are also closed with plugs or valves controlled from the surface (8) (thus obtaining a self-supporting structure). In the shale deposit (2), the process of CO₂ decompression begins and it undergoes phase transition under the temperature in the deposit, which causes intense shale fracturing, CO₂ adsorption and at the same time shale gas desorption. The lateral wells are pre-perforated and CO₂ is injected, thus allowing intensification and expansion of the fracturing process. Pressure sensors are installed in the deposit, near the closed lateral wells, so that it is possible to control processes occurring in the shale. Additionally, the process can be controlled by adding or releasing CO₂ via the valves (6). The intense fracturing in the gas-bearing shale deposit (2) enables releasing shale gas which is forced out by heavier CO₂. The lateral wells (4b, 4c) are opened and the released gas under high pressure comes out via the vertical well (1). The process of gas recovery from the well can occur spontaneously or be carried out under reduced pressure.

The method may be used for different types of gas-bearing or porous rocks. It may also be used in the main wells in which horizontal fragments are drilled at least at two depths.

The suggested method of extraction of gaseous hydrocarbons is much more beneficial in terms of environmental protection. The method requires no large quantities of water, chemical additives and sand for filling the deposit. Another advantage of this method compared to previous solutions is the possibility of using a single vertical well (possibly the existing wells) with horizontal wells to carry out the entire extraction process. A large area of rock crushing is obtained in the deposit compared to other methods which increases the economic profitability of a single well. The method of forcing out shale gas is very effective, and the adsorption and desorption processes occur at the gas molecular level.

Coal or shale may adsorb twice the CO₂ volume compared to methane. This property may be used for obtaining so-called pure energy (in a closed cycle), i.e. methane combustion in close proximity to the deposit to obtain e.g. electric energy and re-injecting CO₂ produced in the processes into the shale deposit. Thus, it could be stated that the suggested national solution of shale gas extraction from small-diameter horizontal wells using liquid CO₂ in a single well is beneficial in terms of both the economy and environmental protection.

This method can be used for extracting e.g. shale gas and at the same time to create CO₂ underground stores.

## Claims

1. A method of combined extraction of gaseous hydrocarbons and CO₂ storage in horizontal wells **characterised in that** a vertical well (1) is drilled in the gas-bearing shale deposit (2) located between seams of different types of rock (3), from which horizontal or quasi-horizontal wells (4a, 4b, 4c) are drilled off radially at least at two depths, and then the horizontal wells (4b, 4c) are closed with plugs and/or valves controlled from the surface (6b, 6c), into which flexible or semi-flexible small-diameter pipes (7) are brought in via the main well (1), and the pipes (7) are brought into the lateral wells (4a), and then they are used for injecting cooled, compressed liquid CO₂, possibly with an admixture of dry sand to maintain fractures, into the gas-bearing shale deposit (2) using a cryogenic pump, while the temperature and pressure in the wells (1) and (4a) are controlled during the CO₂ injection on an ongoing basis by appropriate sensors installed inside them, and after this stage is completed, the wells (4a) are also closed with plugs and/or mini-valves controlled from the surface in the vertical pipe (8), and in the shale deposit (2), the process of CO₂ decompression begins as well as it undergoes phase transition under the temperature in the deposit, which causes intense fracturing, CO₂ adsorption and simultaneous shale gas desorption, and then the lateral wells (4a) are pre-perforated and pressure sensors are installed near the closed lateral wells in the deposit to enable controlling shale processes, and the resulting fractures (5) in the gas-bearing shale deposit (2) enable releasing shale gas which is forced out by heavier CO₂. The lateral wells (4b, 4c) are opened and the released gas under high pressure comes out via the vertical well (1), and the process of gas recovery from the well can occur spontaneously or be carried out under reduced pressure.

2. A method according to claim 1 **characterised in that** the inlets of the horizontal wells (4a, 4b, 4c) are closed or opened inside the main well at relevant times during the process with plugs or valves (6a, 6b, 8) controlled from the surface, where the location and number of the horizontal wells at one depth is adapted to the spatial structure of the deposit, and additionally, the process can be controlled by pumping additional gas CO₂, pouring additional liquid CO₂ or releasing CO₂ via the valves (6).

3. A method according to claim 1 **characterised in that** multiple horizontal wells (4a, 4b, 4c,...) are drilled and the processes are carried out on a step-by-step basis by closing and opening the wells and filling them with CO₂ one by one.

4. A method according to claim 3 **characterised in that** the wells are closed, opened and filled with CO₂ one by one on a bottom-up basis.

5. A method according to claim 1 or 2 or 3 **characterised in that** the shale deposit in the wells drilled at one of the levels (4a) can be pre-perforated (5) (crushed) using different methods of rock destruction.

6. A method according to claim 1 or 2 or 3 **characterised in that** dry sand is added to CO₂.

7. A method according to claim 1 or 2 or 3 or 4 **characterised in that** after exhaustion of the shale gas deposit **in that** the gas deposit is shut in permanently by plugging the well at an appropriate height or by closing it with a possibility of further use of the deposit, a CO₂ greenhouse gas store is created.
